# EUROPEAN PATENT APPLICATION

(11) **EP 4 697 440 A1**
(43) Date of publication of application: **18.02.2026**
(21) Application number: 25190099.9
(22) Date of filing: 17.07.2025
(51) Int. Cl.: H01M 10/0587, H01M 50/538

(54) **SECONDARY BATTERY AND BATTERY PACK**

(30) Priority: 14.08.2024 CN 202411113984
(71) Applicant: AESC Japan Ltd., Yokohama-Shi, Kanagawa 220-0012 (JP)
(72) Inventor: JI, Peng, Jiangyin City, Wuxi City, 214443 (CN); XU, Chengjun, Pudong New Area Shanghai, 201315 (CN)
(74) Representative: Becker, Eberhard

(57) **Abstract**

A secondary battery (100), a battery pack (10), and an electronic device (1) are provided. The secondary battery (100) includes a housing (110), an electrode assembly (120), and a current collecting member (130). A part of the bare foil area (124) is bent along a radius direction of the electrode assembly (120) to form a bent surface area (121). The current collecting member (130) is welded to the bent surface area (121), and forms first and second weld marks (141, 142). Along an axial direction of the electrode assembly (120), the number of layers of part of the second weld mark (142) that extends beyond the first weld mark (141) along the radius direction of the electrode assembly (120) connected to the bare foil area (124) is less than the number of layers of the first weld mark (141) connected to the bare foil area (124).

## Description

### BACKGROUND

### Technical Field

The present disclosure relates to the field of battery technology, specifically to a secondary battery, a battery pack and an electronic device.

### Description of Related Art

DCR (Direct Current Resistance) is a critical parameter of battery performance, referring to the internal resistance value of a battery when direct current passes through. During the charging and discharging processes, batteries generate heat. If the DCR is high, more energy will be dissipated in the form of heat, which may cause the battery temperature to rise, affecting the performance and lifespan of the batter. Sustained high temperatures will accelerate battery degradation, reduce cycle life of battery, and increase the risk of thermal runaway. Additionally, a high DCR will decrease the charging and discharging rates of the battery.

Therefore, DCR has significant impacts on battery efficiency, lifespan, safety, and cost-effectiveness. In view of the above, how to control and optimize DCR to maintain a low value during battery design and manufacturing processes constitutes a technical challenge that needs to be overcome in this industry.

### SUMMARY

Given the shortcomings of the current technology, the present disclosure provides a secondary battery, a battery pack and an electronic device to overcome the technical problem of battery performance and lifespan being affected by high DCR.

To achieve the above purpose and other related purposes, the present disclosure provides a secondary battery, which includes a housing, an electrode assembly and a current collecting member. The electrode assembly is accommodated in the housing. The electrode assembly includes a first electrode sheet, a second electrode sheet and a separator stacked and wound to form a wound structure. An end part of the first electrode sheet includes a bare foil area extending along the winding axial direction of the electrode assembly beyond the separator. A part of the bare foil area is bent along the radius direction of the electrode assembly to form a bent surface area including an overlapping layer of the bare foil area. The current collecting member is welded to the bent surface area and forms a first weld mark and a second weld mark. The second weld mark extends beyond at least one end of the first weld mark along the radius direction of the electrode assembly. Along the axial direction of the electrode assembly, the number of layers of the part where the second weld mark extends beyond the first weld mark along the radius direction of the electrode assembly connected to the bare foil area is less than the number of layers of the first weld mark connected to the bare foil area.

In an example of the secondary battery of the present disclosure, the bare foil area is bent toward the roll center. The bent surface area sequentially includes, from the outer circle to the inner circle of the electrode assembly, a stacking layer increasing area, a stacking layer stabilization area and a stacking layer decreasing area. The first weld mark is distributed in the stacking layer stabilization area, and the second weld mark is at least partially distributed in the stacking layer increasing area and/or the stacking layer decreasing area.

In an example of the secondary battery of the present disclosure, the current collecting member includes multiple weld mark groups. The multiple weld mark groups are spaced part around the center of the current collecting member. Each weld mark group includes multiple weld marks, and the multiple weld marks include at least one first weld mark and at least one second weld mark. Along the circumferential direction of the electrode assembly, the distance between each of the adjacent weld marks is k, wherein the range of k is: 2mm≥k≥0.5mm.

In an example of the secondary battery of the present disclosure, the number of weld mark groups is g, wherein g≥3.

In an example of the secondary battery of the present disclosure, the number of first weld marks is p, wherein p≥2×g.

In an example of the secondary battery of the present disclosure, the number of second weld marks is q, wherein q≤p.

In an example of the secondary battery of the present disclosure, the sum of the welding areas formed by the first weld mark and the second weld mark is s, wherein s≥20mm².

In an example of the secondary battery of the present disclosure, the number of stacking layers in the stacking layer stabilization area is greater than 10. The range of the number of layers of the first weld mark connected to the bare foil area is: 10-18. The range of the number of layers of the part where the second weld mark extends beyond the first weld mark in the radius direction of the electrode assembly connected to the bare foil area is: 8-12.

In an example of the secondary battery of the present disclosure, the shapes of both the first weld mark and the second weld mark are curves, and the radius of curvature at any point on the curve is greater than or equal to 1mm.

In an example of the secondary battery of the present disclosure, the curve is formed by connecting multiple semicircles.

In an example of the secondary battery of the present disclosure, along the radius direction of the electrode assembly, the radius length of the second weld mark located in the stacking layer increasing area is greater than the radius length of the second weld mark located in the stacking layer decreasing area.

In an example of the secondary battery of the present disclosure, along the radius direction of the electrode assembly, the distance from the position of the second weld mark farthest from the winding axis of the electrode assembly to the edge of the bent surface area near the outer circle of the electrode assembly is greater than 1mm.

Since the closer to the outer circle of the electrode assembly, the fewer the number of layers in the bare foil area, the setting of the above technical solution may reduce the risk of the second weld mark burning through the bare foil area, burning the separator, and damaging the active substance at the outer circle of the electrode assembly.

In an example of the secondary battery of the present disclosure, the bare foil area includes a first cut segment near the winding axis of the electrode assembly, a second cut segment near the outer periphery of the electrode assembly, and an uncut segment located between the first cut segment and the second cut segment. Along the axial direction of the electrode assembly, the heights of the first cut segment and the second cut segment are both lower than the height of the uncut segment. Along the winding direction of the electrode assembly, the length of the uncut segment is f, and the total length of the bare foil area is a, wherein the proportion of f to a is in a range of: 75% ≤ f/a ≤ 90%.

In an example of the secondary battery of the present disclosure, along the radius direction of the electrode assembly, the proportion of the number of winding turns in the stacking layer stabilization area to the total number of winding turns of the electrode assembly is m, wherein m ≥ 40%.

In an example of the secondary battery of the present disclosure, along the radius direction of the electrode assembly, the first cut segment is wound to form a first annular area, the second cut segment is wound to form a second annular area, and the width of the first annular area is greater than the width of the second annular area.

In an example of the secondary battery of the present disclosure, the electrode assembly forms a roll center hole through winding. The bare foil area is bent toward the roll center hole and extends into the roll center hole. The roll center hole is at least partially blocked by the bent surface area.

In an example of the secondary battery of the present disclosure, the secondary battery is a columnar battery.

The present disclosure also provides a battery pack, which includes the secondary battery described in any one of the above embodiments.

The present disclosure also provides an electronic device, which includes the battery pack described above.

In the secondary battery of the present disclosure, when the current collecting member is welded to the bent surface area, a first weld mark and a second weld mark are formed. Along the radius direction of the secondary battery, at least one end of the second weld mark extends beyond the first weld mark, thus extending the length of the weld mark along the radius direction of the electrode assembly, and increasing the number of turns of the current collecting member connected to the bent surface area through welding, thereby achieving the effect of reducing DCR. Furthermore, by controlling the number of layers of the second weld mark welded to the foil-free area to be less than the number of layers of the first weld mark welded to the foil-free area, it is possible to reduce the risk of the second weld mark burning through the foil-free area and burning the separator.

### BRIEF DESCRIPTION OF THE DRAWINGS

In order to more clearly illustrate the technical solutions in the embodiments of the present disclosure or in the related art, a brief introduction will be given below to the drawings needed in the description of the embodiments or the related art. Clearly, the drawings described below are only some embodiments of the present disclosure. For those skilled in the art, other embodiments may be obtained based on these drawings without creative effort.
FIG. 1 is a schematic structural view of an embodiment of the secondary battery of the present disclosure.
FIG. 2 is a schematic structural view of an electrode assembly in an embodiment of the secondary battery of the present disclosure.
FIG. 3 is a sectional view of an electrode assembly in an embodiment of the secondary battery of the present disclosure.
FIG. 4 is a schematic structural view of a bare foil area of an electrode assembly in an embodiment of the secondary battery of the present disclosure.
FIG. 5 is a schematic structural view of an electrode assembly and a current collecting member in an embodiment of the secondary battery of the present disclosure.
FIG. 6 is a schematic structural view of an electrode assembly and a current collecting member in another embodiment of the secondary battery of the present disclosure.
FIG. 7 is a schematic structural view of an electrode assembly and a current collecting member in yet another embodiment of the secondary battery of the present disclosure.
FIG. 8 is a sectional view of an electrode assembly in an embodiment of the secondary battery of the present disclosure when the bare foil area is not bent.
FIG. 9 is a schematic structural view of a first electrode sheet before winding in an embodiment of the secondary battery of the present disclosure.
FIG. 10 is a schematic structural view of a second electrode sheet before winding in an embodiment of the secondary battery of the present disclosure.
FIG. 11 is a schematic view of an embodiment of a battery pack of the present disclosure.
FIG. 12 is a schematic view of an embodiment of an electronic device of the present disclosure.

### DESCRIPTION OF THE EMBODIMENTS

The implementation mode of the present disclosure is explained below through specific examples, and those skilled in the art can easily understand other advantages and effects of the present disclosure from the content disclosed in this specification. The present disclosure may also be implemented or applied through other different specific embodiments, and various modifications or changes may be made to the details in this specification based on different perspectives and applications, without departing from the spirit of the present disclosure. It should be noted that, in the absence of conflict, the features in the following embodiments and in the embodiments may be combined with each other. It should also be understood that the terms used in the embodiments of the present disclosure are for describing specific embodiments and not for limiting the scope to be protected by the present disclosure. For test methods where specific conditions are not specified in the following embodiments, they are generally performed under conventional conditions or according to conditions recommended by various manufacturers.

When an embodiment gives a range of values, it should be understood that, unless otherwise stated in the present disclosure, each of the two endpoints of each value range and any value between the two endpoints may be selected. Unless otherwise defined, all technical and scientific terms used in the present disclosure are consistent with the understanding of those skilled in the art regarding the related art and the disclosure of the present disclosure. Any method, device, and material in the related art that are similar or equivalent to the methods, devices, and materials in the embodiments of the present disclosure may also be used to implement the present disclosure.

It should be noted that terms such as "upper", "lower", "left", "right", "middle" and "one" quoted in this specification are merely for clarity of description and not for limiting the scope in which the present disclosure may be implemented. Changes or adjustments in their relative relationships, without substantial changes to the technical content, should also be considered within the scope in which the present disclosure may be implemented.

The secondary battery includes a housing and an electrode assembly, with the electrode assembly accommodated within the housing. The electrode assembly is the component where electrochemical reactions occur in the secondary battery. The housing may contain one or more electrode assemblies.

The electrode assembly is mainly formed by winding or stacking positive electrode sheets and negative electrode sheets, and typically a separator is provided between the positive electrode sheets and negative electrode sheets. The positive electrode sheet includes a positive electrode current collector and a positive electrode active substance, with the positive electrode active substance coated on the surface of the positive electrode current collector. The positive electrode current collector includes a coated area with active substance and an uncoated bare foil area without active substance, and the uncoated bare foil area forms the positive electrode tab of the electrode assembly after winding. The negative electrode sheet includes a negative electrode current collector and negative electrode active substance, with the negative electrode active substance coated on the surface of the negative electrode current collector. The negative electrode current collector includes a coated area with active substance and an uncoated bare foil area without active substance, and the uncoated bare foil area forms the negative electrode tab of the electrode assembly after winding. Taking a lithium-ion secondary battery as an example, the material of the positive electrode current collector may be aluminum, and the positive electrode active substance layer includes positive electrode active substance, which may be lithium cobalt oxide, lithium iron phosphate, ternary lithium, or lithium manganese oxide, etc. The material of the negative electrode current collector may be copper, and the negative electrode active substance layer includes negative electrode active substance, which may be carbon or silicon, etc. The material of the separator may be PP (polypropylene) or PE (polyethylene), etc. To provide protection and insulation for the cell, an insulating film may be used to wrap the outside of the cell, which may be synthesized from PP, PE, PET, PVC, or other polymer materials.

However, the inventors have found that in current secondary batteries, the bare foil area is bent toward the roll center, and the bent surface area, from the outer circle to the inner circle of the electrode assembly, sequentially includes a stacking layer increasing area, a stacking layer stabilization area, and a stacking layer decreasing area. Typically, the weld marks are distributed in the stacking layer stabilization area. Performing welding in the stacking layer stabilization area may allow more layers to be welded and is less likely to weld through, but there is generally a problem of excessive DCR.

Given that being said, the present disclosure provides a technical solution in which, along the radius direction of the secondary battery, the length of the weld mark is extended along the radius direction of the electrode assembly, thus increasing the number of turns of the current collecting member connected to the bare foil area through welding, thereby achieving the effect of reducing DCR. Furthermore, controlling the number of layers of the weld mark welded to the bare foil area makes it possible to reduce the risk of burning the separator due to welding through the bare foil area.

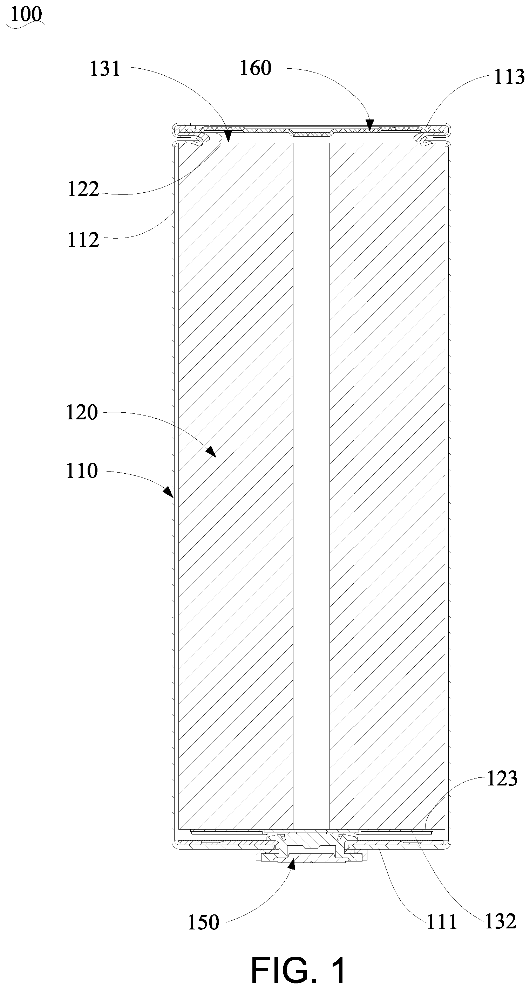

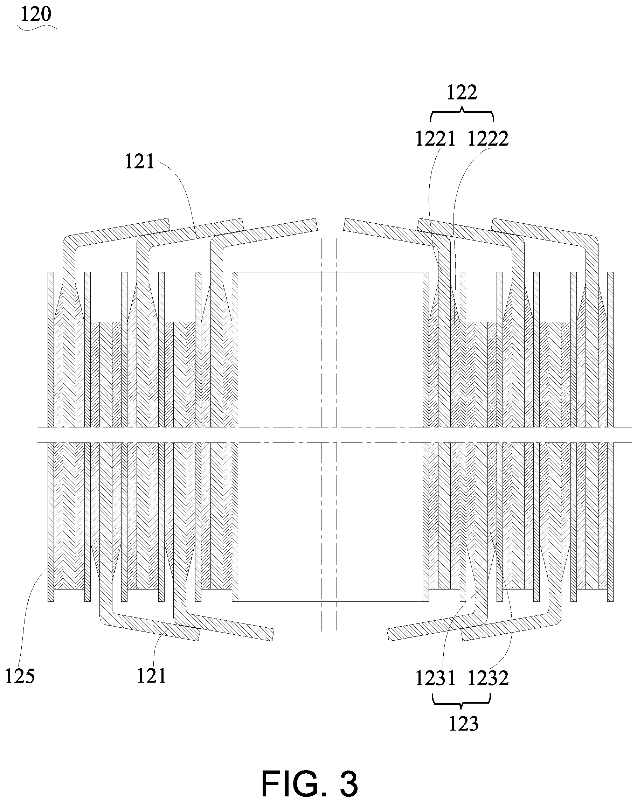

Please refer to FIG. 1 to FIG. 12, the present disclosure provides a secondary battery 100, which includes a housing 110, an electrode assembly 120, a current collecting member 130, an electrode post 150, and a cover plate 160.

Please refer to FIG. 1, the housing 110 includes an end wall 111 and a side wall 112 surrounding the end wall 111. As long as a stable sealing and electrical connection relationship can be formed, the connection between the end wall 111 and the side wall 112 may be achieved through various methods, such as integral stamping, integral casting, or separate welding. The surrounding configuration of side wall 112 is not limited and may be in the form of a columnar or prismatic shape, or the side wall 112 may enclose in the form of any other closed contour that can match the end wall 111. As an embodiment, in this embodiment, the outer edge of the end wall 111 is circular, the side wall 112 surrounds the outer edge of the end wall 111 in a columnar shape, and forms a circular opening 113 at one end of the side wall 112 facing away from the end wall 111. The housing 110 formed by the end wall 111 and the side wall 112 forms an accommodating cavity for accommodating the electrode assembly 120, electrolyte, and other necessary battery components. Specifically, the diameter of the housing 110 may be determined according to the specific dimensions of the electrode assembly 120, such as 18mm, 21mm, 46mm, etc. The material of the housing 110 may be selected from a variety of options, such as copper, iron, aluminum, steel, aluminum alloy, etc. In order to prevent the housing 110 from rusting during long-term use, a layer of anti-rust material such as metallic nickel may be plated on the surface of the housing 110.

Please refer to FIG. 1 to FIG. 3, the electrode assembly 120 is accommodated in the housing 110, and the electrode assembly 120 is the component where electrochemical reactions occur in the secondary battery 100. The housing 110 may contain one or more electrode assemblies 120. The electrode assembly 120 includes a first electrode sheet 122, a second electrode sheet 123, and a separator 125 stacked and wound to form a wound structure. The long end part of the first electrode sheet 122 includes a bare foil area 124 extending beyond the separator 125 along the winding axial direction of the electrode assembly 120. A part of the bare foil area 124 is bent along the radius direction of the electrode assembly 120 to form a bent surface area 121 including an overlapping layer of the bare foil area 124. The first electrode sheet 122 and the second electrode sheet 123 have opposite polarities. Exemplarily, the first electrode sheet 122 may be a positive electrode sheet, and the second electrode sheet 123 may be a negative electrode sheet. In this embodiment, the first electrode sheet 122 is a negative electrode sheet, and the second electrode sheet 123 is a positive electrode sheet. Specifically, the positive electrode sheet includes a positive electrode current collector 1231 and positive electrode active substance, and the positive electrode active substance is coated on the surface of the positive electrode current collector 1231. The positive electrode current collector 1231 includes a second coated area 1232 coated with active substance and an uncoated bare foil area 124 without active substance. The bare foil area 124 is bent after winding to form the positive electrode tab of the electrode assembly 120. The negative electrode sheet includes a negative electrode current collector 1221 and negative electrode active substance, and the negative electrode active substance is coated on the surface of the negative electrode current collector 1221. The negative electrode current collector 1221 includes a first coated area 1222 coated with active substance and an uncoated bare foil area 124 without active substance. The bare foil area 124 is bent after winding to form the negative electrode tab of the electrode assembly 120.

Please refer to FIG. 1, the current collecting member 130 includes a first current collecting member 131 electrically connected to the first electrode sheet 122 and a second current collecting member 132 electrically connected to the second electrode sheet 123. The materials of the first current collecting member 131 and the second current collecting member 132 are selected according to the polarity of the electrode sheets they are connected to. For example, if the second current collecting member 132 is connected to the positive electrode sheet, then the second current collecting member 132 may be made of aluminum metal, while the first current collecting member 131 is connected to the negative electrode sheet and may be made of copper metal. If the second current collecting member 132 is connected to the negative electrode sheet, then the second current collecting member 132 may be made of copper metal, while the first current collecting member 131 is connected to the positive electrode sheet and may be made of aluminum metal. The shapes and structures of the second current collecting member 132 and the first current collecting member 131 are not limited herein, as long as they can achieve stable and reliable electrical connection.

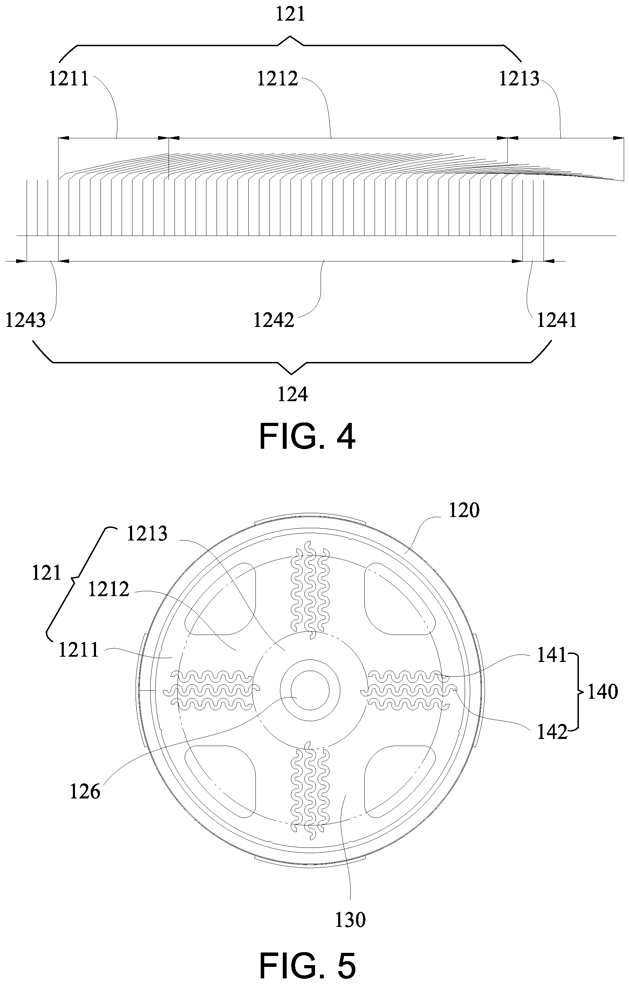

Please refer to FIG. 5 to FIG. 7, the current collecting member 130 is welded to the bent surface area 121. The welding method may be selected from ultrasonic welding, resistance welding, laser welding, and so on, which is not limited herein. In this embodiment, laser welding is adopted, and weld marks are formed during the welding process. The weld marks are formed through heating and subsequent cooling processes, which may characterize the welding path of the current collecting member 130 and the bent surface area 121, as well as the number of layers connected to the bare foil area 124. In this embodiment, a first weld mark 141 and a second weld mark 142 are formed. Along the radius direction of the electrode assembly 120, where the radius direction is not limited to the radius direction in a cylinder, for example, in some prisms with polygonal cross-sections, the direction from the outer circle of the roll to the winding axis may also be called the radius direction, the second weld mark 142 extends beyond at least one end of the first weld mark 141. The shapes of the first weld mark 141 and the second weld mark 142 are not limited herein, and may be straight lines, curves (wavy lines, arcs, sine curves, etc.), broken lines or other irregular patterns. The relative positions of the first weld mark 141 and the second weld mark 142 may be arranged in many manners, which is not limited herein, as long as the second weld mark 142 has a part that extends beyond one end or both ends of the first weld mark 141 along the radius direction of the electrode assembly 120. Such setting may make it possible to extend the length of the weld mark along the radius direction of the electrode assembly 120, thus increasing the number of turns of the current collecting member 130 connected to the bent surface area 121 by welding, thereby reducing the DCR.

Please refer to FIG. 5 to FIG. 7, considering that the number of layers in the bare foil area 124 in the bent surface area 121 where a part of the second weld mark 142 extends beyond the first weld mark 141 is less than the number of layers in the bare foil area 124 where the first weld mark 141 is located, preferably, along the axial direction of the electrode assembly 120, the number of layers of the part of the second weld mark 142 that extends beyond the first weld mark 141 along the radius direction of the electrode assembly 120 connected to the bare foil area 124 is smaller than the number of layers of the first weld mark 141 connected to the bare foil area 124. Such setting may reduce the risk of the second weld mark 142 burning through the bare foil area 124 and burning the separator 125. In practical operation, the number of layers of the weld mark connected to the bare foil area 124 may be adjusted by adjusting the welding power. Specifically, the higher the welding power, the more layers of the bare foil area 124 are connected to the weld mark. The measurement of the number of layers of the first weld mark 141 or the second weld mark 142 connected to the bare foil area 124 may be obtained by first performing CT on the electrode assembly 120 or making a cross-section along the axial direction of the electrode assembly 120, and then observation is performed to acquire the number of layers of the first weld mark 141 or the second weld mark 142 connected to the bare foil area 124. It should be noted that during welding, there is a stage where laser power gradually increases at the beginning of welding, and correspondingly, the number of layers of the weld mark connected to the bare foil area 124 also gradually increases. Similarly, there is a stage where the laser power gradually decreases at the end of welding, and correspondingly, the number of layers of the weld mark connected to the bare foil area 124 also gradually decreases. Therefore, the above-mentioned beginning of welding and the end of welding cannot be used for the comparison of the number of layers of the first weld mark 141 connected to the bare foil area 124 and the number of layers of the second weld mark 142 connected to the bare foil area 124. Instead, the comparison is made between the number of layers of the middle part of the first weld mark 141 connected to the bare foil area 124 and the number of layers of the middle part of the second weld mark 142 connected to the bare foil area 124.

It should be noted that, regardless of whether the first electrode sheet 122 is a positive electrode sheet or a negative electrode sheet, the effect of reducing DCR may be achieved after adopting the above technical solution. In another embodiment, the above technical solution may also be adopted for both the positive electrode sheet and the negative electrode sheet, so it is possible to achieve a better effect of reducing DCR.

Please refer to FIG. 1 to FIG. 2, the electrode post 150 passes through the end wall 111, and is insulated from the end wall 111. The structural form of the electrode post 150 may be any suitable form that can pass through the end wall 111 and electrically connect with the first electrode sheet 122 or the second electrode sheet 123, for example, the cross-section may be circular, square, prismatic or an irregular contour that can achieve stable conduction. One end of the electrode post 150 facing the electrode assembly 120 passes through the end wall 111 and directly electrically connects with the bare foil area 124 or connects with the bare foil area 124 through indirect transfer. For example, the electrode post 150 may be electrically connected either through the first current collecting member 131 to the first electrode sheet 122, or through the second current collecting member 132 to the second electrode sheet 123. One end of the electrode post 150 facing away from the electrode assembly 120 is exposed to the outside of the housing 110 to form a corresponding electrode. The electrical polarity of the electrode post 150 may be positive or negative. For example, in an embodiment, the electrode post 150 is electrically connected to the first electrode sheet 122, and if the polarity of the first electrode sheet 122 is positive, then the electrode post 150 is positive, and the housing 110 forms the corresponding negative electrode. In another embodiment, if the polarity of the first electrode sheet 122 is negative, then the electrode post 150 is negative, and the housing 110 forms the corresponding positive electrode. A configuration hole for the electrode post 150 is disposed on the end wall 111, and the electrode post 150 passes through the configuration hole for the electrode post 150 in a sealed and insulated manner. The structure of such housing 110 may improve configuration efficiency, and the assembly and sealing performance is superior compared to the housing 110 with openings 113 at both ends. The electrode post 150 is made of a conductive metal material. The material of the electrode post 150 may be aluminum. If the material of the electrode post 150 is aluminum, the riveting process can be easily performed. In this embodiment, the material of the electrode post 150 is aluminum, and the polarity thereof is positive. Corresponding to the electrode post 150, the material of the housing 110 is low carbon steel, and forms the negative electrode accordingly. The electrode post 150 is electrically insulated from the housing 110. Electrical insulation between the electrode post 150 and the end wall 111 of the housing 110 may be achieved in various ways. For example, insulation may be achieved by placing an insulating washer between the electrode post 150 and the end wall 111. Alternatively, insulation may be achieved by forming an insulating coating layer on a part of the electrode post 150. Alternatively, some of the above methods may be combined for application.

Please refer to FIG. 1, the cover plate 160 is disposed to seal the opening 113. The shape of the outer edge of the cover plate 160 corresponds to the shape of the opening 113, and is connected with the side wall 112 to seal the opening 113. In a specific embodiment, the periphery of the cover plate 160 has a protrusion protruding toward the interior of the housing 110, and one side of the protrusion facing away from electrode assembly 120 is formed as a first recess. The orthographic projection shape of the first recess is not limited herein and may be annular, square, or other irregular shapes. The protrusion includes a first side wall 112 that matches with the inner wall of the housing 110. The first side wall 112 matches with the side wall 112 near the opening 113. The protrusion is used for assembly guidance between the cover plate 160 and the opening 113, as well as the matching between the side wall 112 of the housing 110 and the cover plate 160, which enables quick circumferential positioning between the cover plate 160 and the opening 113, thereby improving the efficiency of welding and the radial position accuracy of welding.

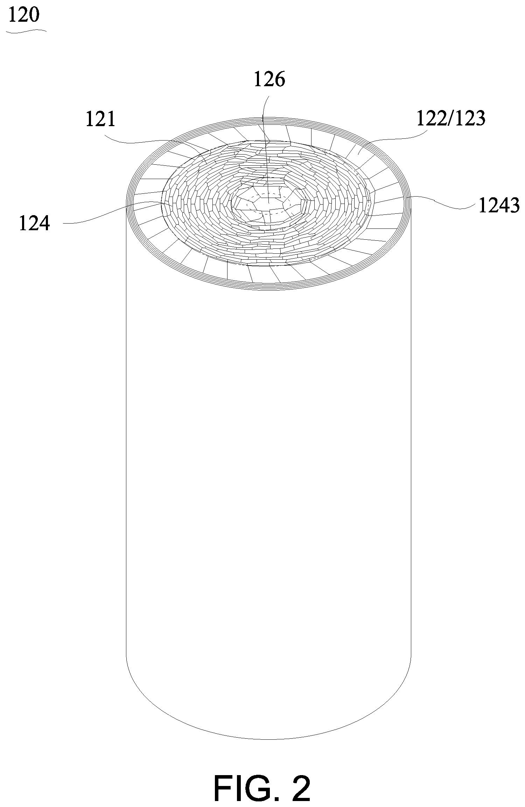

Please refer to FIG. 2 to FIG. 4, in an example of the secondary battery 100 of the present disclosure, the bare foil area 124 is bent toward the roll center. This structure arrangement causes the number of stacking layers from the outer circle to the inner circle of the electrode assembly 120 to change from gradually increasing to stable and then to gradually decreasing. Therefore, the bent surface area 121, from the outer circle to the inner circle of the electrode assembly 120, sequentially includes a stacking layer increasing area 1211, a stacking layer stabilization area 1212, and a stacking layer decreasing area 1213. Specifically, please refer to FIG. 4, the stacking layer increasing area 1211 is the area covered by the bent bare foil area 124 located at the outermost side of the electrode assembly 120, the stacking layer decreasing area 1213 is the area covered by the bent bare foil area 124 closest to the roll center, and the stacking layer stabilization area 1212 is the area between the stacking layer increasing area 1211 and the stacking layer decreasing area 1213. The first weld mark 141 is distributed in the stacking layer stabilization area 1212. Since the stacking layer stabilization area 1212 has the largest number of layers arranged evenly, distributing the first weld mark 141 in the stacking layer stabilization area 1212 may achieve connection with more layers of the bare foil area 124, and is not easily welded through, thereby achieving the effect of reducing DCR, improving electrical conductivity, safety performance, and energy density to improve battery performance. The second weld mark 142 is at least partially distributed in the stacking layer increasing area 1211 and/or the stacking layer decreasing area 1213. In some embodiments, the second weld mark 142 is distributed in the stacking layer increasing area 1211 and the stacking layer stabilization area 1212. In another embodiment, the second weld mark 142 is distributed in the stacking layer decreasing area 1213 and the stacking layer stabilization area 1212. In yet another embodiment, the second weld mark 142 is distributed in the stacking layer increasing area 1211, the stacking layer stabilization area 1212, and the stacking layer decreasing area 1213. In some other embodiments, the second weld mark 142 may also be distributed only in the stacking layer increasing area 1211 or only in the stacking layer decreasing area 1213. All of the above arrangements may increase the effect of connecting with more turns of the bare foil area 124, further reducing DCR, and improving electrical conductivity, safety performance, and energy density to improve battery performance. In this embodiment, the second weld mark 142 is distributed in the stacking layer increasing area 1211, the stacking layer stabilization area 1212, and the stacking layer decreasing area 1213, thereby achieving a better effect of reducing DCR.

Please refer to FIG. 5 to FIG. 7, in an example of the secondary battery 100 of the present disclosure, the current collecting member 130 includes multiple weld mark groups 140, for example, there may be 2 groups, 3 groups, 4 groups, 5 groups, 6 groups or more groups. The multiple weld mark groups 140 are spaced apart around the center of the current collecting member 130. This arrangement may facilitate uniform distribution of current through the bare foil area 124, thereby enhancing the performance of the secondary battery 100, and may also improve welding strength. Each weld mark group 140 includes at least one first weld mark 141 and at least one second weld mark 142, which may enable each weld mark group 140 to achieve the effect of increasing connection with more turns of the bare foil area 124, and may also increase the welding area with the bare foil area 124, thereby improving the stability of the DCR of the secondary battery 100.

Furthermore, along the circumferential direction of the electrode assembly 120, the distance between adjacent weld marks is k, wherein the range of k is: 2mm≥k≥0.5mm. It should be noted that due to the influence of shape and position of the weld marks, the distance between adjacent weld marks may not be a fixed value. The above range may be interpreted as that the closest distance between adjacent weld marks is not less than 0.5mm, and the farthest distance between adjacent weld marks is not greater than 2mm. The setting of k≥0.5mm ensures that adjacent weld marks maintain a safe distance, which may reduce the probability of welding through. The setting of k≤2mm may allow the weld marks in each weld mark group 140 to be arranged in a more concentrated manner, leaving space for placing pressure relief holes.

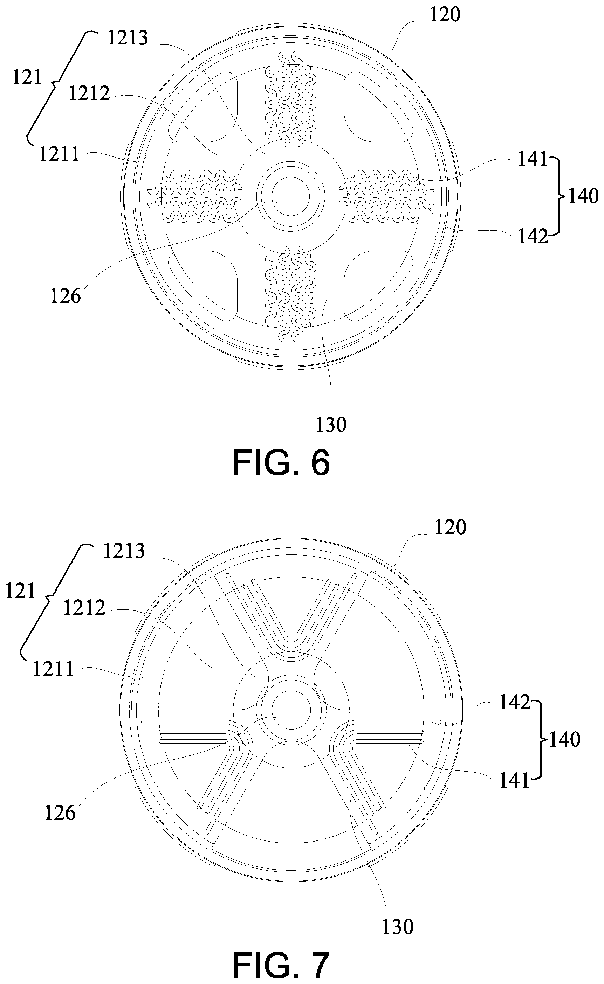

Please refer to FIG. 5 to FIG. 7, in an example of the secondary battery 100 of the present disclosure, the number of weld mark groups 140 is g, wherein g≥3, and g may be 3, 4, 5, 6, 8, 9, etc. In an embodiment, there are three weld mark groups 140, as shown in FIG. 7. In another embodiment, the number of weld mark groups 140 is four, as shown in FIG. 5 and FIG. 6. The number of weld mark groups 140 is greater than or equal to three, plus the arrangement of multiple weld mark groups 140 spaced apart around the center of the current collecting member 130, it is possible to facilitate uniform distribution of current through the electrode assembly 120 and the current collecting member 130, as well as reduce the path length of the current drawn from the electrode assembly 120. Additionally, it is possible to enable the weld mark group 140 and the bare foil area 124 to have a larger welding area, thus achieving better resistance stability for the secondary battery 100.

Please refer to FIG. 5 to FIG. 7, in an example of the secondary battery 100 of the present disclosure, the number of first weld marks 141 is p, wherein p≥2×g. The first weld mark 141 is located in the stacking layer stabilization area 1212, and connected to more layers of the bare foil area 124. Setting each weld mark group 140 to have greater than or equal to two first weld marks 141 has a more significant effect on reducing the DCR of the secondary battery 100. In an embodiment, each weld mark group 140 has two first weld marks 141, as shown in FIG. 5 and FIG. 6. Furthermore, the arrangement of multiple first weld marks 141 is not limited herein, the first weld marks 141 may be arranged in parallel, or may be around the winding axis.

Please refer to FIG. 5 to FIG. 7, in an example of the secondary battery 100 of the present disclosure, the number of second weld marks 142 is q, wherein q≤p. The second weld marks 142 are at least partially distributed in the stacking layer increasing area 1211 and/or the stacking layer decreasing area 1213, which may increase the effect of connecting more turns between the current collecting member 130 and the bare foil area 124. Therefore, the number q of second weld marks 142 is set within the range of q≤p, meaning that the number of second weld marks 142 in each weld mark group 140 is less than or equal to the number of first weld marks 141. Such setting may achieve the effect of increasing the number of turns connected to the bare foil area 124 without significantly affecting production efficiency. In an embodiment, the number of first weld marks 141 in each weld mark group 140 is two, and the number of second weld marks 142 is one, as shown in FIG. 5 and FIG. 7. In another embodiment, the number of first weld marks 141 in each weld mark group 140 is two, and the number of second weld marks 142 is also two, as shown in FIG. 6.

Please refer to FIG. 5 to FIG. 7, in an example of the secondary battery 100 of the present disclosure, the sum of the welding areas formed by the first weld marks 141 and the second weld marks 142 is s, wherein s≥20mm². It should be noted that the welding area refers to the area of the projection of the first weld mark 141 itself and the second weld mark 142 itself along the axial direction of the electrode assembly 120. The welding area in the above range may enable the secondary battery 100 to have better resistance stability, and is also favourable for enhancing current-carrying capability.

Please refer to FIG. 2 and FIG. 4 to FIG. 7, in an example of the secondary battery 100 of the present disclosure, the number of stacking layers in the stacking layer stabilization area 1212 is greater than 10, for example, it may be 11 layers, 12 layers, 13 layers, 14 layers, 15 layers, 16 layers, 17 layers or more layers. The range of the number of layers of the first weld mark 141 connected to the bare foil area 124 is: 10-18, for example, it may be 10 layers, 11 layers, 12 layers, 13 layers, 14 layers, 15 layers, 16 layers, 17 layers or 18 layers. The range of the number of layers of the second weld mark 142 connected to the bare foil area 124 is: 8-12, for example, it may be 8 layers, 9 layers, 10 layers, 11 layers, 12 layers, 13 layers, 14 layers or 15 layers. It should be noted that the beginning of welding and the end of welding of the above first weld mark 141 and second weld mark 142 are not used for counting the bare foil area 124 connected to the first weld mark 141 and second weld mark 142. Along the height direction of the electrode assembly 120, the number of layers of the first weld mark 141 connected to the bare foil area 124 is set at 10-18 layers, which can both reduce DCR and improve the safety performance of the connection between the current collecting member 130 and the electrode assembly 120. Considering that the second weld mark 142 includes parts located in the stacking layer increasing area 1211 and/or the stacking layer decreasing area 1213, setting the number of layers of the second weld mark 142 connected to the bare foil area 124 at 8-12 layers may reduce the probability of the second weld mark 142 welding through in the stacking layer increasing area 1211 and/or the stacking layer decreasing area 1213. In the actual operation process, the number of layers of the weld marks connected to the bare foil area 124 can be adjusted by adjusting the welding power. For example, in some embodiments, laser welding technology is adopted, the welding power for welding the first weld mark 141 is 290W, and the welding power for welding the second weld mark 142 is 270W.

Please refer to FIG. 5 to FIG. 7, in an example of the secondary battery 100 of the present disclosure, the shapes of both the first weld mark 141 and the second weld mark 142 are curves, and the radius of curvature at any point on the curve is greater than or equal to 1mm. This structure may achieve uniformity of welding time at any point during the welding process, which can both improve the uniformity of the number of layers of any point on the first weld mark 141 and the second weld mark 142 connected to the bare foil area 124, and make the transition at the corners of the welding trajectory smooth, reducing the risk of welding through the bare foil area 124 and burning the separator 125 due to concentrated welding heat at a specific position.

Please refer to FIG. 5 and FIG. 6, in an example of the secondary battery 100 of the present disclosure, the curve is formed by connecting multiple semicircles. The radius of curvature at each point on the curve of this shape tends to be equal, which is more favourable for improving the uniformity of the number of layers of any point on the first weld mark 141 and the second weld mark 142 connected to the bare foil area 124, and further reduces the risk of burning through the bare foil area 124 and burning the separator 125.

Please refer to FIG. 5 and FIG. 6, in an example of the secondary battery 100 of the present disclosure, along the radius direction of the electrode assembly 120, the radius length of the second weld mark 142 in the stacking layer increasing area 1211 is greater than the radius length of the second weld mark 142 in the stacking layer decreasing area 1213. The longer the radius length of the second weld mark 142, the more turns the second weld mark 142 may connect. Since the single-turn length of the stacking layer increasing area 1211 is greater than the single-turn length of the stacking layer decreasing area 1213, when the same number of connected turns of the second weld mark 142 is increased in the stacking layer increasing area 1211 and the stacking layer decreasing area 1213, the stacking layer increasing area 1211 has a more significant effect on reducing DCR than the stacking layer decreasing area 1213. Therefore, setting the radius length of the second weld mark 142 located in the stacking layer increasing area 1211 to be greater than the radius length of the second weld mark 142 located in the stacking layer decreasing area 1213 may achieve a better effect of reducing DCR.

Please refer to FIG. 5 to FIG. 7, in an example of the secondary battery 100 of the present disclosure, considering that along the radius direction of the electrode assembly 120, the closer to the outer circle of the electrode assembly 120, the fewer the number of layers in the bare foil area 124, in order to reduce the risk of the second weld mark 142 welding through the bare foil area 124, burning the separator 125, and damaging the active substance at the outer circle of the electrode assembly 120, it is set that the distance from the position of the second weld mark 142 farthest from the winding axis of the electrode assembly 120 to the edge of the bent surface area 121 near the outer circle of the electrode assembly 120 is greater than 1mm.

Please refer to FIG. 4 and FIG. 8 to FIG. 10, in an example of the secondary battery 100 of the present disclosure, the bare foil area 124 includes a first cut segment 1241 near the winding axis of the electrode assembly 120, a second cut segment 1243 near the outer periphery of the electrode assembly 120, and an uncut segment 1242 located between the first cut segment 1241 and the second cut segment 1243. Along the axial direction of the electrode assembly 120, the heights of the first cut segment 1241 and the second cut segment 1243 are both lower than the height of the uncut segment 1242. The setting of the first cut segment 1241 may alleviate the interference that occurs near the winding axis when the bare foil area 124 is bent, and the setting of the second cut segment 1243 may improve the problem of the bare foil area 124 forming a protrusion toward the outer circle of the electrode assembly 120 during bending, which affects insertion into the housing. Furthermore, along the winding direction of the electrode assembly 120, the length of the uncut segment 1242 is f, and the total length of the bare foil area 124 is a, wherein the proportion of f to a ranges from: 75% ≤ f/a ≤ 90%, for example, the proportion may be 75%, 78%, 80%, 82%, 85%, 88%, or 90%, etc. This uncut segment 1242 accounts for a large proportion of the total length of the bare foil area 124, making the annular width of the annular area formed by the stacking layer stabilization area 1212 to be large, which is favourable to increasing the length allowed by the first weld mark 141, thereby increasing the effect of connecting more turns with the bare foil area 124, so as to achieve the effects of reducing DCR, improving electrical conductivity, safety performance, and energy density, and improving battery performance.

It should be noted that, regardless of whether the first electrode sheet 122 is a positive electrode sheet or a negative electrode sheet, the effect of reducing DCR may be achieved after adopting the above technical solution. In another embodiment, the above technical solution may also be adopted for both the positive electrode sheet and the negative electrode sheet, so it is possible to achieve a better effect of reducing DCR.

Please refer to FIG. 5 to FIG. 8, in an example of the secondary battery 100 of the present disclosure, along the radius direction of the electrode assembly 120, the ratio of the number of turns in the stacking layer stabilization area 1212 to the total number of turns of the electrode assembly 120 is m, wherein m ≥ 40%, for example, the ratio may be 40%, 42%, 45%, 50%, 52%, 55%, 58% or 60%, etc. When the m value is within the above range, it is also possible to achieve, under the premise that the height of the bare foil area 124 remains unchanged, a large annular width of the annular area formed by the stacking layer stabilization area 1212, which is favourable to increasing the length allowed by the first weld mark 141, thereby increasing the effect of connecting more turns with the bare foil area 124, so as to achieve the effects of reducing resistance, improving electrical conductivity, safety performance, and energy density, and improving battery performance. It should be noted that, please refer to FIG. 4, the measurement of the number of turns in the stacking layer stabilization area 1212 may be obtained by performing CT on the electrode assembly 120 or making a cross-section along the axial direction of the electrode assembly 120, and then observation is performed to acquire the number of turns in the bare foil area 124 located within the stacking layer stabilization area 1212. The total number of turns of the electrode assembly 120 corresponds to the number of turns in all bare foil areas 124 in the entire bent surface area 121.

Please refer to FIG. 4 and FIG. 8 to FIG. 10, in an example of the secondary battery 100 of the present disclosure, along the winding direction of the electrode assembly 120, the length of the first cut segment 1241 is b, and the total length of the bare foil area 124 is a, wherein the proportion of b to a ranges from: 5% < b/a < 15%, for example, the proportion may be 6%, 7%, 8%, 10%, 12%, 14% or 15%, etc. This setting reduces the length of the first cut segment 1241, and correspondingly increases the number of turns in the bare foil area 124 that may be welded, thereby reducing resistance, improving electrical conductivity, safety performance, and energy density, and improving battery performance. When the proportion of b to a is large, it means that the proportion of the second cut segment 1243 to the total length of the bare foil area 124 is small, which makes the outer diameter of the range of the stacking layer increasing area large; longer the length of a single-turn, the more significant effect of reducing internal resistance. When the proportion of b to a is small, the stacking layer decreasing area 1213 is closer to the roll center, which has a better protective effect on the separator 125, as well as a current guiding effect.

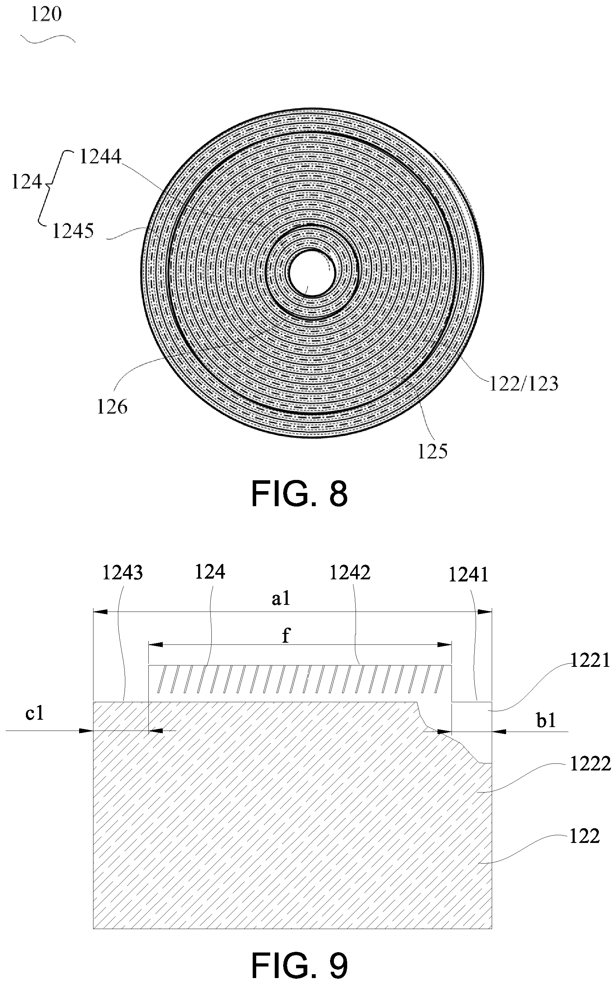

Please refer to FIG. 2 and FIG. 8, in an example of the secondary battery 100 of the present disclosure, the electrode assembly 120 forms a roll center hole 126 through winding. The bare foil area 124 is bent toward of the roll center hole 126, which may cover the first annular area 1244, and can protect the separator 125 of the first annular area 1244 to prevent the separator 125 from being washed during the injection of electrolyte. The bare foil area 124 extends into the roll center hole 126, and the roll center hole 126 is at least partially blocked by the bent surface area 121. Although at least part of the center hole is blocked, the part extending toward the roll center hole 126 has a downward inclination, which may serve as a fluid guide.

Please refer to FIG. 8 to FIG. 10, in an example of the secondary battery 100 of the present disclosure, along the winding direction of the electrode assembly 120, the length of the second cut segment 1243 is c, and the total length of the bare foil area 124 is a, wherein the proportion c to a ranges from: 0 < c/a < 15%, for example, the proportion may be 1%, 2%, 3%, 4%, 5%, 6%, 7%, 8%, 10%, 12%, 13%, 14% or 15%, etc. This technical solution reduces the length of the second cut segment 1243, similarly increases the number of turns in the bare foil area 124 that may be welded, thereby reducing resistance, improving electrical conductivity, safety performance, and energy density, and improving battery performance. In addition, when the proportion of c to a is small, the outer diameter of the range of the stacking layer increasing area becomes large, the length of a single-turn is long, and the effect of reducing internal resistance is more significant. When the proportion of c to a is large, the stacking layer decreasing area is closer to the roll center, which has a better protective effect on the separator 125, as well as a current guiding effect.

In an example of the secondary battery 100 of the present disclosure, along the radius direction of the electrode assembly 120, the first cut segment 1241 is wound to form a first annular area 1244, and the second cut segment 1243 is wound to form a second annular area 1245, where the width of the first annular area 1244 is greater than the width of the second annular area 1245. The larger the diameter of the bare foil area 124 located in the outer circle, the longer the circumference, and the greater the contribution to reducing resistance. Such setting reduces the width of the second annular area 1245, so that closer the bare foil area 124 is to the outer circle, the better effect of reducing resistance.

In an example of the secondary battery 100 of the present disclosure, the secondary battery 100 is a columnar battery, which has advantages including high energy density, long cycle life, and good safety performance.

On the basis of conforming to the common knowledge in the field, the above preferred conditions may be combined freely to obtain various preferred embodiments of the present disclosure. Through performing tests on the comparative examples and several preferred embodiments of this technical solution, the welding form shown in FIG. 6 is adopted as an example for testing, and the values of the corresponding technical features and the measured DCR values are recorded, as shown in Table 1, and analysis is performed in conjunction with FIG. 8 to FIG. 10.

Values of corresponding technical features and measured DCR values in Table 1

| Name | | Comparative Example | Example 1 | Example 2 | Example 3 | Example 4 | Example 5 | Example 6 | Example 7 | Example 8 |
|---|---|---|---|---|---|---|---|---|---|---|
| First electrode sheet | a1/mm | 5006 | 5006 | 5006 | 5006 | 5006 | 5006 | 5006 | 5006 | 5006 |
| | b1/mm | 680 | 680 | 680 | 400 | 400 | 400 | 400 | 400 | 400 |
| | c1/mm | 565 | 565 | 565 | 280 | 280 | 280 | 280 | 280 | 280 |
| Second electrode sheet | a2/mm | 4870 | 4870 | 4870 | 4870 | 4870 | 4870 | 4870 | 4870 | 4870 |
| | b2/mm | 810 | 810 | 810 | 500 | 500 | 500 | 500 | 500 | 500 |
| | c2/mm | 565 | 565 | 565 | 280 | 280 | 280 | 280 | 280 | 280 |
| First electrode sheet | number/strip | 4 | 4 | 5 | 4 | 4 | 4 | 2 | 2 | 2 |
| | length/mm | 10 | 10 | 10 | 10 | 11 | 11 | 10 | 10 | 10 |
| First weld mark | | | | | | | | | | |
| | power/w | 360 | 390 | 360 | 390 | 390 | 390 | 390 | 390 | 420 |
| Second electrode sheet | number/strip | 4 | 4 | 4 | 4 | 4 | 4 | 4 | 2 | 2 |
| | length/mm | 10 | 10 | 10 | 10 | 11 | 11 | 10 | 10 | 10 |
| First weld mark | power/w | 250 | 290 | 250 | 290 | 290 | 290 | 290 | 290 | 290 |
| First electrode sheet | number/strip | | | | | | | 2 | 2 | 2 |
| | length/mm | | | | | | | 12 | 12 | 12 |
| Second weld mark | power/w | | | | | | | 370 | 370 | 390 |
| Second electrode sheet | number/strip | | | | | | | | 2 | 2 |
| | length/mm | | | | | | | | 12 | 12 |
| Second weld mark | power/w | | | | | | | | 270 | 270 |
| DCR value/mΩ | | 2.25 | 2.14 | 2.22 | 2.06 | 1.98 | 1.94 | 2.01 | 1.97 | 1.95 |

It should be noted in Table 1 that in Example 4, the lengths of the first weld mark 141 of the first electrode sheet 122 and the first weld mark 141 of the second electrode sheet 123 are both 11mm, and the first weld mark 141 of the first electrode sheet 122 and the first weld mark 141 of the second electrode sheet 123 mentioned above are both obtained by extending 1mm toward the stacking layer decreasing area 1213 based on Example 3. In Example 5, the lengths of the first weld mark 141 of the first electrode sheet 122 and the first weld mark 141 of the second electrode sheet 123 are also both 11mm, but in Example 5, the first weld mark 141 of the first electrode sheet 122 and the first weld mark 141 of the second electrode sheet 123 are both obtained by extending 1mm toward the stacking layer increasing area 1211 based on Example 3.

The following is a detailed explanation of this technical solution through comparative examples and several preferred embodiments in conjunction with Table 1.

### Comparative Example

The secondary battery 100 is a columnar battery, in which the first electrode sheet 122 is a negative electrode sheet and the second electrode sheet 123 is a positive electrode sheet. For ease of distinction, the total length of the first electrode sheet 122 is named a1, the length of the first cut segment 1241 of the first electrode sheet 122 is named b1, the length of the second cut segment 1243 is named c1, the total length of the second electrode sheet 123 is named a2, the length of the first cut segment 1241 in the second electrode sheet 123 is named b2, and the length of the second cut segment 1243 is named c2. a1 is 5006mm, b1 is 680mm, and c1 is 565mm; a2 is 4870mm, b2 is 810mm, and c2 is 565mm. It should be noted that the tolerance range for the above lengths is ±5mm, and the tolerance values for the lengths shown in Table 1 and mentioned above are not shown. After calculation, f1 is 3761mm, f1/a1 is 75.1%, f2 is 3495mm, and f1/a1 is 69.8%.

The number of weld mark groups 140 formed on the first current collecting member 131 welded to the first electrode sheet 122 is g1, wherein g1 is 4. The number of first weld marks 141 in each weld mark group 140 is p1, wherein p1 is 4, and there is no second weld mark 142 provided. The welding power of each first weld mark 141 is 360W, and the radius length of each first weld mark 141 is 10mm. The number of weld mark groups 140 formed on the second current collecting member 132 welded to the second electrode sheet 123 is g2, wherein g2 is 4. The number of first weld marks 141 in each weld mark group is p2, wherein p2 is 4, and there is no second weld mark 142 provided. The welding power of each first weld mark 141 is 250W, and the radius length of each first weld mark 141 is 10mm.

Under the conditions of SOC at 50%, temperature at 25°C, resting for 3 hours and DC being 10S, the DCR value of this columnar battery is 2.25mΩ.

### Example 1

The difference between Example 1 and the Comparative Example is: the welding power of the first weld mark 141 on the first current collecting member 131 is 390W, and the welding power of the first weld mark 141 on the second current collecting member 132 is 290W, under the circumstances, the DCR value is 2.14mΩ. In this embodiment, when the welding power increases, the number of layers of the weld mark connected to the bare foil area 124 also increases, which may achieve the effect of reducing DCR.

### Example 2

The difference between Example 2 and the Comparative Example is: in the weld mark group 140 formed on the first current collecting member 131 welded to the first electrode sheet 122, the number of first weld marks 141 in each weld mark group 140 is p1, and p1 is 5, under the circumstances, the DCR value is 2.22mΩ. In this embodiment, the number of first weld marks 141 is increased, which increases the welding area and may reduce DCR.

### Example 3

The difference between Example 3 and Example 1 is: b1 is 400mm, c1 is 280mm; b2 is 500mm, c2 is 280mm. It should be noted that the tolerance range for the above lengths is ±5mm, and the tolerance values for the lengths shown in Table 1 and mentioned above are not shown. After calculation, f1 is 4326mm, f1/a1 is 86.4%, f2 is 4090mm, and f1/a1 is 84.0%, under the circumstances, the DCR value is 2.06mΩ, and there is no separator 125 burned in this example. It can be seen that the annular width of the annular area formed by the stacking layer stabilization area 1212 is large, which is favourable to increase the length allowed by the first weld mark 141 and effective length, thereby increasing the effect of connecting more turns with the bare foil area 124, so as to achieve the effect of reducing DCR, improving conductivity, safety performance and energy density, and improving battery performance.

### Example 4

The difference between Example 4 and Example 3 is: the radius length of the first weld mark 141 on the first current collecting member 131 welded to the first electrode sheet 122 is 11mm. Specifically, the radius length is extended by 1mm toward the stacking layer decreasing area 1213 based on the first weld mark 141 of Example 3. The radius length of the first weld mark 141 on the second current collecting member 132 welded to the second electrode sheet 123 is 11mm. Specifically, the radius length is extended by 1mm toward the stacking layer decreasing area 1213 based on the first weld mark 141 of Example 3. Under the circumstances, the DCR value is 1.98mΩ. This embodiment increases the length allowed by the first weld mark 141, thereby increasing the effect of connecting more turns with the bare foil area 124, so as to achieve the effect of reducing DCR. However, because there are fewer layers in the bare foil area 124 in the stacking layer decreasing area 1213, the separator 125 is burned.

### Example 5

The difference between Example 5 and Example 4 is: the first weld mark 141 on the first current collecting member 131 welded to the first electrode sheet 122 is extended by 1mm toward the stacking layer increasing area 1211 based on the first weld mark 141 of Example 3, and the first weld mark 141 on the second current collecting member 132 welded to the second electrode sheet 123 is extended by 1mm toward the stacking layer increasing area 1211 based on the first weld mark 141 of Example 3. Under the circumstances, the DCR value is 1.94mΩ. This example verifies that when the same number of connected turns of weld marks is increased in the stacking layer increasing area 1211 and the stacking layer decreasing area 1213, the stacking layer increasing area 1211 has a more significant effect on reducing DCR than the stacking layer decreasing area 1213, so extending the increased length of the weld mark toward the stacking layer increasing area 1211 may achieve a better effect of reducing DCR. In this example, the separator 125 is still found to be burned.

### Example 6

The difference between Example 6 and Example 3 is: in the weld mark group 140 formed on the first current collecting member 131 welded to the first electrode sheet 122, the number of first weld marks 141 in each weld mark group 140 is p1, and p1 is 2. The number of second weld marks 142 is q1, and q1 is 2. The radius length of each second weld mark 142 is 12mm, and the welding power of each second weld mark 142 is 370W, under the circumstances, the DCR value is 2.01mΩ. In this embodiment, the number of first weld marks 141 is reduced, the number of second weld marks 142 is increased, and the radius length of the second weld mark 142 is increased, which increases the number of turns welded to the bare foil area 124. In the meantime, the welding power of the second weld mark 142 is reduced to 370W, reducing the number of layers of the second weld mark 142 connected to the bare foil area 124, thus achieving the effect of reducing the DCR value, while reducing the occurrence of burned separator 125.

### Example 7

The difference between Example 7 and Example 6 is: the weld mark group 140 formed on the second current collecting member 132 welded to the second electrode sheet 123 has changed. Specifically, the number of weld mark groups 140 is g2, and g2 is 4. The number of first weld marks 141 in each weld mark group 140 is p2, and p2 is 2. The number of second weld marks 142 is q2, and q2 is 2. The radius length of each second weld mark 142 is 12mm, and the welding power of each second weld mark 142 is 270W, under the circumstances, the DCR value is 1.97mΩ. Furthermore, in this example, no separator 125 is burned. Compared to Example 6, this example applies the above technical solution to the second electrode sheet 123, reducing the number of first weld marks 141, increasing the number of second weld marks 142, increasing the radius length of the second weld mark 142, which in turn increases the number of turns welded to the bare foil area 124. Meanwhile, the welding power of the second weld marks 142 is reduced, reducing the number of layers of the second weld mark 142 connected to the bare foil area 124, thus further reducing the DCR value, while reducing the occurrence of burned separator 125.

### Example 8

The difference between Example 8 and Example 7 is: the welding power of the first weld mark 141 formed on the first current collecting member 131 welded to the first electrode sheet 122 is 420W, and the welding power of the second weld mark 142 is 390W, under the circumstances, the DCR value is 1.95mΩ. In this example, compared to Example 7, the welding power of both the first weld mark 141 and the second weld mark 142 is increased, increasing the number of layers of weld marks connected to the bare foil area 124, thus achieving the effect of further reducing the DCR value.

In an example of the secondary battery 100 of the present disclosure, the manufacturing method of the secondary battery 100 of the present disclosure includes the following steps.

Cutting bare foil area 124: The first cut segment 1241 near the winding axis of the electrode assembly 120 after winding is cut, and the second cut segment 1243 near the outer periphery of the electrode assembly 120 is cut, and an uncut segment 1242 is formed between the first cut segment 1241 and the second cut segment 1243.

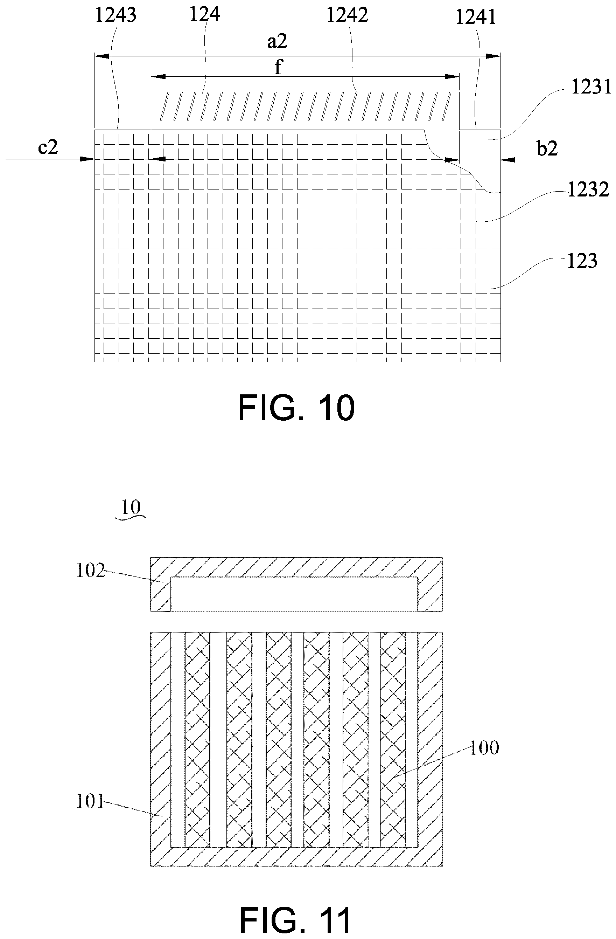

Preferably, the length of the uncut segment 1242 is f, the total length of the bare foil area 124 is a, and the proportion of f to a ranges from: 75%≤f/a≤90%, for example, the proportion may be 75%, 78%, 80%, 82%, 85%, 88% or 90%, etc. It should be noted that the cutting of the bare foil area 124 of the first electrode sheet 122 and the cutting of the bare foil area 124 of the second electrode sheet 123 are performed using the above method. Please refer to FIG. 9 and FIG. 10, where a1 shown in FIG. 9 and a2 shown in FIG. 10 are different identifiers for a in electrode sheets of different polarities to distinguish the polarities. Both a1 and a2 conform to the range of 75%≤f/a≤90%. This uncut segment 1242 accounts for a large proportion of the total length of the bare foil area 124, making the annular width of the annular area formed by the stacking layer stabilization area 1212 large, which is favourable to increasing the length allowed by the first weld mark 141, thereby increasing the effect of connecting more turns with the bare foil area 124, so as to achieve the effect of reducing DCR, improving electrical conductivity, safety performance and energy density, and improving battery performance.

Winding: The first electrode sheet 122, the second electrode sheet 123, and the separator 125 are stacked and wound to form a wound structure. The long end parts of the first electrode sheet 122 and the second electrode sheet 123 both include bare foil areas 124 extending from the separator 125 along the winding axial direction of the electrode assembly 120. A part of the bare foil area 124 is bent along the radius direction of the electrode assembly 120 to form a bent surface area 121 including an overlapping layer of the bare foil area 124. The first electrode sheet 122 and the second electrode sheet 123 have opposite polarities. Exemplarily, the first electrode sheet 122 may be a positive electrode sheet, and the second electrode sheet 123 may be a negative electrode sheet. In this embodiment, the first electrode sheet 122 is a negative electrode sheet, and the second electrode sheet 123 is a positive electrode sheet.

Welding current collecting member 130 to electrode assembly 120: Specifically, the current collecting member 130 is welded to the bent surface area 121. The current collecting member 130 includes a first current collecting member 131 welded to the bent surface area 121 formed by the first electrode sheet 122 and a second current collecting member 132 welded to the bent surface area 121 formed by the second electrode sheet 123.

Preferably, the current collecting member 130 and the bent surface area 121 are welded to form two types of weld marks, including a first weld mark 141 and a second weld mark 142. Along the radius direction of the electrode assembly 120, the second weld mark 142 extends beyond at least one end of the first weld mark 141. The welding power of the second weld mark 142 is less than the welding power of the first weld mark 141, so that the number of layers of the part of the second weld mark 142 that extends beyond the first weld mark 141 along the radius direction of the electrode assembly 120 connected to the bare foil area 124 is less than the number of layers of the first weld mark 141 connected to the bare foil area 124. Such configuration achieves the effect of increasing the number of turns of the current collecting member 130 connected to the bent surface area 121 by welding to reduce DCR, while also reducing the risk of the second weld mark 142 burning through the bare foil area 124 and burning the separator 125.

Insertion into housing: The electrode assembly 120 that has been welded to the current collecting member 130 is placed into the housing 110 through the opening 113. The method of disposing the electrode assembly 120 in this step is not limited herein; for example, the electrode assembly 120 may be disposed manually or by a robotic arm.

The positive terminal and negative terminal are disposed.

Injection of electrolyte: The method of injecting electrolyte is not limited herein; electrolyte may be injected through the opening 113, or an injection hole may be provided on the end wall 111 for injection. Preferably, in this embodiment, the electrolyte is injected through the opening 113, which reduces the process of making an injection hole on the end wall 111. The existing opening 113 may be directly used for injection, simplifying the process and reducing costs. Since the length of the first cutting segment 1241 is reduced, the stacking layer decreasing area 1213 is closer to the roll center, which may serve as a guide for the electrolyte injection, improving the injection efficiency, and providing some protection to the separator 125.

Sealing: The cover plate 160 is disposed to seal the opening 113. There are multiple methods of sealing, which are not limited herein. In this embodiment, first, the outer periphery of the housing 110 is rolled to form a groove that is concave toward the center of the housing 110 to limit the movement of the electrode assembly 120 in the axial direction. Then, a mechanical sealing process is performed to stamp and seal the cover plate 160, thereby sealing and disposing the cover plate 160 on the opening 113 of the housing 110. This step is performed with mature technology, low cost, and high efficiency.

Please refer to FIG. 11, the present disclosure also provides a battery pack 10. The battery pack 10 includes the secondary battery 100 described in any one of the above embodiments. In an embodiment of the battery pack 10 of the present disclosure, the battery pack 10 includes a casing 101, a casing cover 102, and multiple secondary batteries 100. The multiple secondary batteries 100 are placed in the casing 101, connected in series or parallel, or connected through a mixture of series and parallel connections. The casing cover 102 is disposed to seal the casing 101 to protect the multiple secondary batteries 100. It should be noted that in addition to the secondary battery 100 of the present disclosure, the battery pack 10 may also include a thermal management system for the battery pack 10, a circuit board, and other parts. The battery pack 10 may be a battery module, a battery pack, an energy storage cabinet, etc. Details in this regard will not be elaborated one by one here.

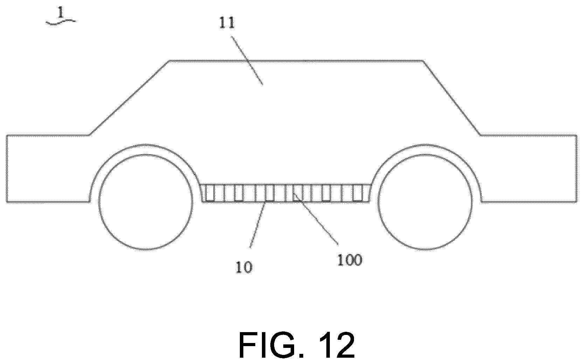

Please refer to FIG. 12, the present disclosure also provides an electronic device 1. The electronic device 1 includes the above-mentioned battery pack 10. The operating part 11 is electrically connected to the battery pack 10 to obtain power support. As an example, the electronic device 1 is a vehicle. The vehicle may be a gasoline vehicle, a gas vehicle, or a new energy vehicle. The new energy vehicle may be a pure electric vehicle, a hybrid vehicle, or a range-extended vehicle, and so on, but is not limited thereto. The operating part 11 is a car body. The battery pack 10 is set at the bottom of the car body and provides power support for the operation of the vehicle or the operation of electrical components in the vehicle. However, in some other embodiments, the electronic device 1 may also be a mobile phone, a portable device, a laptop computer, a ship, a spacecraft, an electric toy, and an electric tool, etc. The spacecraft includes aircraft, rockets, space shuttles, and spaceships, etc. The operating part 11 may be a unit component that can obtain power from the battery pack 10 and perform corresponding operations, such as the fan blade rotation unit of a fan, the dust suction operating unit of a vacuum cleaner, etc. Electric toys include fixed or mobile electric toys, such as game consoles, electric car toys, electric ship toys, and electric aircraft toys, and so on. Electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers, etc. The embodiments of the present disclosure do not impose special restrictions on the above electronic device 1.

In the secondary battery of the present disclosure, a first weld mark and a second weld mark are formed when welding the current collecting member to the bent surface area. Moreover, along the radius direction of the secondary battery, the second weld mark extends beyond at least one end of the first weld mark, thus extending the length of the weld mark along the radius direction of the electrode assembly, thereby increasing the number of turns of the current collecting member connected to the bent surface area by welding, and thereby achieving the effect of reducing DCR. Furthermore, controlling the number of layers of the second weld mark welded to the bare foil area to be less than the number of layers of the first weld mark welded to the bare foil area may reduce the risk of the second weld mark burning through the bare foil area and burning the separator. Therefore, the present disclosure effectively overcomes some practical problems in the existing technology, thus having high utilization value and practical significance.

## Claims

1. A secondary battery (100), comprising:
a housing (110);
an electrode assembly (120), accommodated in the housing (110), wherein the electrode assembly (120) comprises a first electrode sheet (122), a second electrode sheet (123) and a separator (125) stacked and wound to form a wound structure, an end part of the first electrode sheet (122) comprises a bare foil area (124) extending along a winding axial direction of the electrode assembly (120) beyond the separator (125), a part of the bare foil area (124) is bent along a radius direction of the electrode assembly (120) to form a bent surface area (121)comprising an overlapping layer of the bare foil area (124);
a current collecting member (130), welded to the bent surface area (121)and forming a first weld mark (141) and a second weld mark (142), wherein the second weld mark (142) extends beyond at least one end of the first weld mark (141) along the radius direction of the electrode assembly (120);
wherein the secondary battery (100) is **characterised in that** along an axial direction of the electrode assembly (120), a number of layers of a part where the second weld mark (142) extends beyond the first weld mark (141) along the radius direction of the electrode assembly (120) connected to the bare foil area (124) is less than a number of layers of the first weld mark (141) connected to the bare foil area (124).

2. The secondary battery (100) according to claim 1, wherein the bare foil area (124) is bent toward a roll center, the bent surface area (121)sequentially comprises, from an outer circle to an inner circle of the electrode assembly (120), a stacking layer increasing area (1211), a stacking layer stabilization area (1212)and a stacking layer decreasing area (1213), the first weld mark (141) is distributed in the stacking layer stabilization area (1212), and the second weld mark (142) is at least partially distributed in the stacking layer increasing area (1211) and/or the stacking layer decreasing area (1213).

3. The secondary battery (100) according to claim 2, wherein the current collecting member (130) comprises a plurality of weld mark groups (140), the plurality of weld mark groups (140) are spaced part around a center of the current collecting member (130), each of the weld mark groups (140) comprises a plurality of weld marks, and the plurality of weld marks comprises at least one of the first weld mark (141) and at least one of the second weld mark (142), along a circumferential direction of the electrode assembly (120), a distance between each of the adjacent weld marks is k, wherein a range of k is: 2mm≥k≥0.5mm.

4. The secondary battery (100) according to claim 3, wherein a number of the weld mark groups (140) is g, wherein g≥3.

5. The secondary battery (100) according to claim 4, wherein a number of the first weld marks (141) is p, and a number of the second weld marks (142) is q, where either p ≥ 2×g, or q ≤ p, or both.

6. The secondary battery (100) according to any one of claims 1-5, wherein a sum of welding areas formed by the first weld mark (141) and the second weld mark (142) is s, wherein s≥20mm².

7. The secondary battery (100) according to any one of claims 2-5, wherein a number of stacking layers in the stacking layer stabilization area (1212)is greater than 10, a range of the number of the layers of the first weld mark (141) connected to the bare foil area (124) is: 10-18, a range of the number of the layers of the part where the second weld mark (142) extends beyond the first weld mark (141) along the radius direction of the electrode assembly (120) connected to the bare foil area (124) is: 8-12.

8. The secondary battery (100) according to claim 7, wherein shapes of both the first weld mark (141) and the second weld mark (142) are curves, and a radius of curvature at any point on the curve is greater than or equal to 1mm, and the curve is formed by connecting a plurality of semicircles.

9. The secondary battery (100) according to any one of claims 2-5, wherein along the radius direction of the electrode assembly (120), a radius length of the second weld mark (142) located in the stacking layer increasing area (1211) is greater than a radius length of the second weld mark (142) located in the stacking layer decreasing area (1213).

10. The secondary battery (100) according to any one of claims 1-5, wherein along the radius direction of the electrode assembly (120), a distance from a position of the second weld mark (142) farthest from the winding axis of the electrode assembly (120) to an edge of the bent surface area (121)near the outer circle of the electrode assembly (120) is greater than 1mm.

11. The secondary battery (100) according to claim 2, wherein the bare foil area (124) comprises a first cut segment (1241) near the winding axis of the electrode assembly (120), a second cut segment (1243) near an outer periphery of the electrode assembly (120), and an uncut segment (1242) located between the first cut segment (1241) and the second cut segment (1243), along the axial direction of the electrode assembly (120), heights of the first cut segment (1241) and the second cut segment (1243) are both lower than a height of the uncut segment (1242), along a winding direction of the electrode assembly (120), a length of the uncut segment (1242) is f, and a total length of the bare foil area (124) is a, wherein a proportion of f to a is in a range of: 75% ≤ f/a ≤ 90%.

12. The secondary battery (100) according to claim 11, wherein the secondary battery (100) is a columnar battery, along the radius direction of the electrode assembly (120), a proportion of a number of winding turns in the stacking layer stabilization area (1212)to a total number of winding turns of the electrode assembly (120) is m, wherein m ≥ 40%.

13. The secondary battery (100) according to claim 11, wherein along the radius direction of the electrode assembly (120), the first cut segment (1241) is wound to form a first annular area (1244), the second cut segment (1243) is wound to form a second annular area (1245), and a width of the first annular area (1244) is greater than a width of the second annular area (1245).

14. The secondary battery (100) according to any one of claims 11-13, wherein the electrode assembly (120) forms a roll center hole (126) through winding, the bare foil area (124) is bent toward the roll center hole (126) and extends into the roll center hole(126), the roll center hole (126) is at least partially blocked by the bent surface area (121).

15. A battery pack (10), comprising the secondary battery (100) according to any one of claims 1-14.
